# EUROPEAN PATENT APPLICATION

(11) **EP 4 415 197 A1**
(43) Date of publication of application: **14.08.2024**
(21) Application number: 23155912.1
(22) Date of filing: 09.02.2023
(51) Int. Cl.: H02J 1/00, H02J 1/08, H02J 1/14

(54) **HIGH VOLTAGE DIRECT CURRENT POWERED AIRCRAFT APPLIANCES**

(71) Applicant: B/E Aerospace, Inc., Winston Salem, NC 27105 (US)
(72) Inventor: VAN OOSTROM, Pieter, 6685BG Haalderen (NL); PEREZ CAMACHO, Manuel, 3431BH Nieuwegein (NL)
(74) Representative: Dehns

(57) **Abstract**

There is provided an appliance (300, 700) for aircraft, wherein the appliance is configured to be powered by high voltage direct current, HVDC, power at its input (301, 701).

## Description

### FIELD

This invention relates to the field of aircraft appliances, and particularly aircraft appliances configured to utilise HV DC power.

### BACKGROUND

Typically, vehicles such as aircraft generate variable frequency AC by means of primary and/or auxiliary generators coupled to the engines using the rotation of the aircraft's engine to spin and produce power. The alternating current produced has a variable frequency since it is dependent on the speed of the engine, although some aircrafts use a constant speed drive (CSD) transmission to produce a constant speed to create a constant AC frequency (usually 3-phase 115 VAC at 400 Hz). This power is distributed throughout the aircraft and rectified (transformed to DC) to be stored in the batteries, used by avionics and/or other appliances.

Common facilities on both private, commercial and military aircraft, such as catering facilities, include one or more galleys that are equipped with stand-alone galley appliances, which are often referred to as electrical galley insert equipment (also referred to as a "GAIN"). These include, but are not limited to, steam or convection ovens, microwave ovens, chillers/refrigerators/freezers and beverage maker products (such as water heaters, coffee makers, etc. also referred to as "BMP"). In addition, there may be other appliances such as a Point-Of-Use (POU) chiller which may be adopted to provide ad-hoc air conditioning based on the air conditioning requirements of the aircraft. Such appliances may also be found in transportable galley systems, such as those for use in military aircraft. Multiple AC/AC and AC/DC converters add weight to the vehicle and can introduce inefficiencies.

In addition, in order to comply with stringent requirements of the aircraft power supply, extensive development of complex electronics and high qualification testing efforts are required. Most of the electrical sub-components within the GAINs operate on direct current (motors, heating resistors, valves, electronics, etc.), which is converted within each unit via an integrated AC/DC converter from the alternating current that is provided from the aircraft power supply system.

It would be desirable to reduce the weight and increase the efficiency of such aircraft systems.

### SUMMARY

According to a first aspect, there is provided an appliance for aircraft, wherein the appliance is configured to be powered by high voltage direct current, HVDC, power at its input.

Such an appliance goes against conventional appliances for use in aircraft, where all GAINs and other aircraft appliances that operate in this manner have been designed to operate on 3-phase 115V AC power at their input. There are no known GAINs or POU chiller aircraft appliances that operate on input HVDC power. As such, the HVDC appliances provided herein may be provided without internal transformers and AC/DC converters, thereby presenting significant weight, and efficiency savings. As would be appreciated, appliances for aircraft are appliances that are suitable for use in aircraft, for example being configured to comply with aircraft standards (e.g. ARINC/ATLAS). HVDC relates to higher voltage supplies (i.e. 130, 270, 540VDC).

The appliance may comprise a low voltage load path comprising at least one low voltage load, and a DC/DC converter configured to convert HVDC power from the input to a low voltage DC output for use by the low voltage loads; and a high voltage load path comprising at least one high voltage load, and wherein the high voltage line path is configured to provide HVDC power via a HVDC power bus from the input to the high voltage load(s) for use by the high voltage load(s). In this way, the appliance may accept HVDC at its input, and use that power for both its low power, and high power loads, without the need for weighty transformers within the appliance to power the DC loads.

The high voltage line path may comprise a sense/detect module that is configured to detect a fault in the appliance, and at least one safety relay configured to disconnect the HVDC input from the high voltage load(s) if a fault is detected by the sense/detect module.

The appliance may be a Point of Use, POU, chiller.

The appliance may be a galley insert, GAIN.

The GAIN may be an oven, and the high voltage load(s) may comprise a plurality of heating elements topologies connected in parallel to the HVDC power bus. In such a case, the at least one safety relay may be connected in series with each of the heating elements.

The GAIN may be a chiller, and the high voltage load(s) may comprise a compressor powered directly from the HVDC power bus, and configured to be commanded by a microcontroller.

The at least one safety relay may comprises at least one safety relay may be located at the power bus. The at least one safety relay may comprise at least one solid state relay. The at least one safety relay may comprise at least one electromechanical relay.

According to a second aspect, there may be provided a modular system for use in an aircraft comprising: a low voltage control module configured to receive high voltage direct current, HVDC, at its input and control at least one low voltage DC load; and at least one HVDC module configured to receive HVDC power at its input and provide power and control to a HVDC load; wherein the at least one HVDC module is operatively connected to and controlled by the low voltage control module. By providing a system for aircraft that is configured to accept HVDC at its input, and utilises DC power for both its low power and high power loads, it is possible to provide a modular system that shares a common low voltage DC control module. In this way, again a system configured to utilise HVDC power in aircraft is provided.

The at least one HVDC module may comprise one or more of; a heating module configured to power and control at least one HVDC heating element, a compressor module configured to power and control a compressor for a chiller, and a microwave module configured to power and control a microwave source.

In a third aspect, there is provided an aircraft comprising; a HVDC power supply network, and at least one appliance as defined above.

In a fourth aspect, there is provided an aircraft comprising; a HVDC power supply network, and at least one modular system as defined above.

These aircraft may utilise a HVDC power supply network, and therefore distribute power around the aircraft as HVDC.

### BRIEF DESCRIPTION OF THE DRAWINGS

Certain examples of the disclosure will now be described, by way of example only, with reference to the accompanying drawings, in which:
Figure 1 shows a simplified functional diagram for an example AC GAIN unit, such as an oven;
Figure 2 shows a simplified functional diagram for another example AC GAIN unit, such as a chiller;
Figure 3 shows an oven GAIN unit that operates on HVDC;
Figure 4A shows an AC safety switch arrangement;
Figures 4B, 4C, 4D, and 4E show HVDC safety relay systems;
Figure 5A shows a sense/detect circuit for use in a HVDC GAIN, and Figure 5B shows operations that should be followed by such a circuit;
Figure 5C shows a decision table for the sense/detect circuit and its operations;
Figure 6 shows a comparison between heating control for use with an AC GAIN oven unit, and control for use with a HVDC GAIN oven unit;
Figure 7 shows a functional diagram of a chiller/refrigerator/freezer GAIN 700 that operates on HVDC;
Figure 8 shows an example motor control, and how it may control a brushless DC compressor;
Figure 9 shows a modular aircraft appliance arrangement.

### DETAILED DESCRIPTION

Whilst the methods and systems herein may be mostly described with regards to galley inserts (GAINs), it will be appreciated that the teaching herein could be applied to any aircraft appliances, such as a POU chiller. In addition, reference is made herein to aircraft appliances, which would be understood as referring to appliances that are suitable for use in aircraft, i.e. having a suitable shape/form and function for use within an aircraft, configured to comply with aircraft standards (e.g. ARINC/ATLAS).

In addition, since there are many voltage classifications, herein common aircraft manufacturer terminology is adopted, where supply networks (e.g. 28VDC), which is meant for loads below 300W, is considered low voltage direct current (LVDC) and higher voltage supplies (i.e. 130, 270, 540VDC) are considered high voltage (HVDC). In addition, whilst reference is made herein to a 270VDC scenario, it is intended that such appliances/components operate within expected operated voltage ranges. For example, a 270V DC component may have a normal operating voltage range of +250VDC to +320VDC, and an abnormal operating voltage range of +220VDC to +356VDC.

As outlined above, typically in aircraft, power is generated and transmitted as AC power, and then converted to DC at some components for some applications and used by other AC appliances throughout the aircraft (such as GAINs), which tend to also internally convert the power to DC.

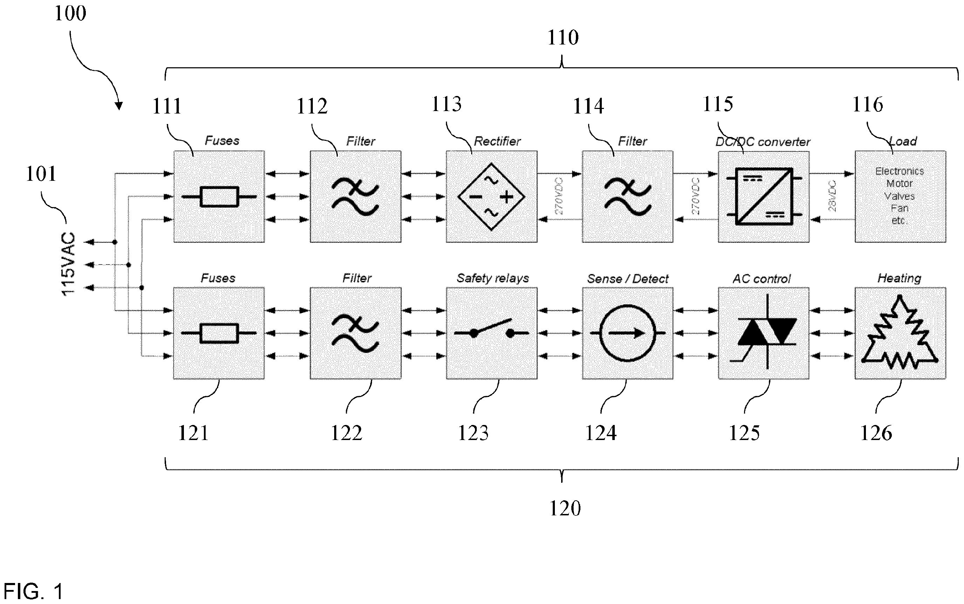

For example, a simplified functional diagram for an example GAIN unit 100, such as an oven (e.g. a steam or convection oven), may be seen in Figure 1. As can be seen, at its input 101, 3-phases 115V AC power is provided, and split into two paths. There is a first path 110 which is a low voltage path comprising fuses 111, filter 112, and a rectifier 113 to convert the input 115AC power to DC power, for example at 270VDC. The HVDC input may then be filtered by filter 114, and then converted by a DC/DC converter 115 to a lower voltage DC power, for example at 28V, i.e. at 200W for use in loads 116. As an example, the loads 116 may comprise electronics, motors, valves, fans, etc. There is then a high voltage load path 120 that operates at the input power 115V AC, i.e. at 3600W. The high voltage load path may comprise again fuses 121, filter 122, and then safety switches 123, a sense and detection module 124 (for example, for sensing the input voltage, frequency, current and safety switch status), heating control 125 and heating elements 126.

Beverage makers (BMPs) and their water heaters operate in a similar manner to ovens, and therefore include the same diagram blocks. As an alternative to separate filters 112 and 122 in ovens or BMPs, a common line filter may be provided before the operational control module, which may be similar to the module shown in Figure 1.

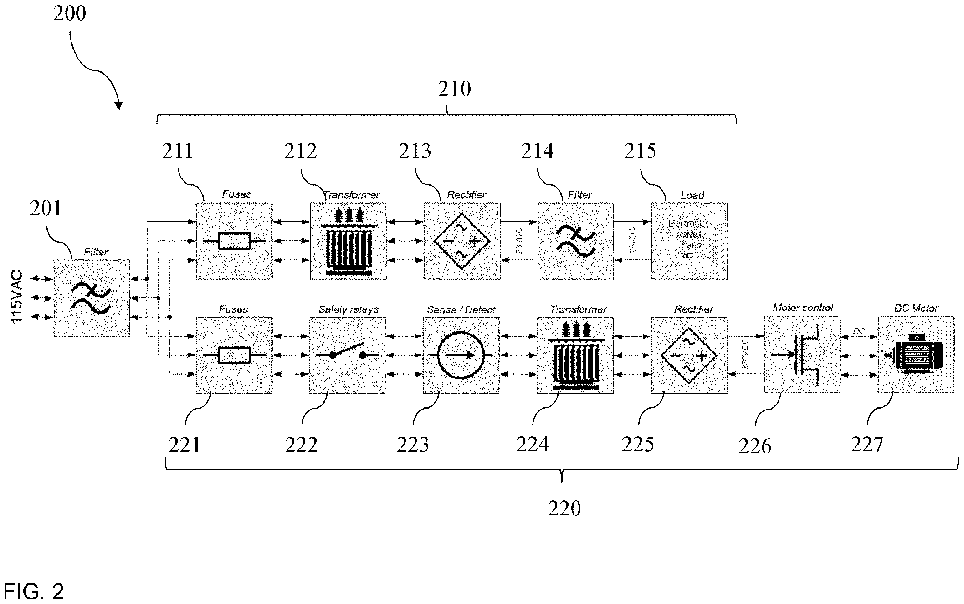

A simplified functional diagram for another example GAIN unit 200 may be seen in Figure 2. Whereas GAIN unit 100 might be a relatively high-power device such an oven/beverage maker (e.g. in the region of 4200W), GAIN unit 200 may be configured to operate at a comparatively lower current, such as a beverage or air chiller at, for example, 400W.

Similarly to Figure 1, GAIN unit 200 may comprise a low voltage path 210 and a high voltage path 220. In the example of Figure 2, the low voltage path 210 and the high voltage path 220 may share a common line filter 201, although it would be appreciated that this may be replaced by separate line filters on each path.

The low voltage path 210 may comprise filters 211, and a transformer 212/rectifier 213 combination to convert the 115AC input power to a lower voltage DC power, for example 28V DC, for filtering by filter 214 and ultimate use by loads 215 such as electronics, motors, valves, fans, etc.

As can be seen, the high voltage path 220 is ultimately configured to convert the 3-phase AC input to HVDC for control 226 and powering the compressor 227. In order to do so, high voltage path 220 may comprise fuses 221, safety relays 222, and a sense and detection module 223. There may then be provided a transformer 224/rectifier 225 arrangement configured to, convert the 3-phase 115AC input power to a higher voltage DC power, for example 270V DC for the motor control 226, which controls the compressor 227.

As would be appreciated, GAINs units 100, 200 are just two example known GAINs units, and there are other known GAINs units. For example, there also exist beverage makers, as described above, or microwave ovens such as those based on magnetron sources or solid-state radio frequency (SSRF) may be utilized. In addition, other appliances for use within aircraft, such as POU chillers.

As can be seen above, common amongst all of the example GAINs and aircraft appliances is that electrical sub-components within the GAINs are often operating on DC. The DC power is generated inside each GAIN by an AC/DC converter or a transformer and rectifier from the alternating current that is provided to the galley from the aircraft power supply system, adding further weight and complexity to each GAIN unit.

In addition, due to stringent Electromagnetic Interference (EMI) requirements, the transformer and rectifier on the low and high voltage paths may be bulky and complex systems such as a multiple-winding transformer in combination with a multiple pulse rectifier. Such systems add further weight and complexity to the aircraft.

In view of the above, the inventors in this case have recognized that it would be beneficial to remove such units within such appliances. Therefore, it is proposed to provide aircraft appliances that are configured to be powered by HVDC at their input. By providing suits, such as GAINs, it is possible to at least eliminate such units within each individual unit, thereby resulting in substantial weight savings, as well as saving space and complexity.

Such GAINs may find particular use in aircrafts that provide HVDC electrical power directly from primary and/or auxiliary generators such as fuel cells, batteries, or the like, whether in a hybrid power distribution network wherein both AC and HVDC power buses are provided, or a purely DC configuration, where only HVDC power buses are provided.

For example, in contrast to the situation outlined above where power is generated and transmitted as AC power, a line of HVDC powered GAINs would enable the generated AC power to be converted HVDC at or near the generator, and then distributed around the aircraft as HVDC and utilised as DC power. As all components of the proposed HVDC aircraft appliances operate on DC power, this eliminates the need for further converters in each unit, and therefore saves considerable weight. In addition, HVDC can be transmitted through fewer wires than 3-phase 115V AC power. Therefore, substantial weight and space savings may be realized here too, resulting in improved efficiency, reduced fuel consumption and space utilisation.

Such HVDC GAINs go against conventional inserts, where, all GAINs and other aircraft appliances that operate in this manner have been designed to operate on 3-phase 115V AC power at their input. There are no known GAINs or POU chiller aircraft appliances that operate on input HVDC power.

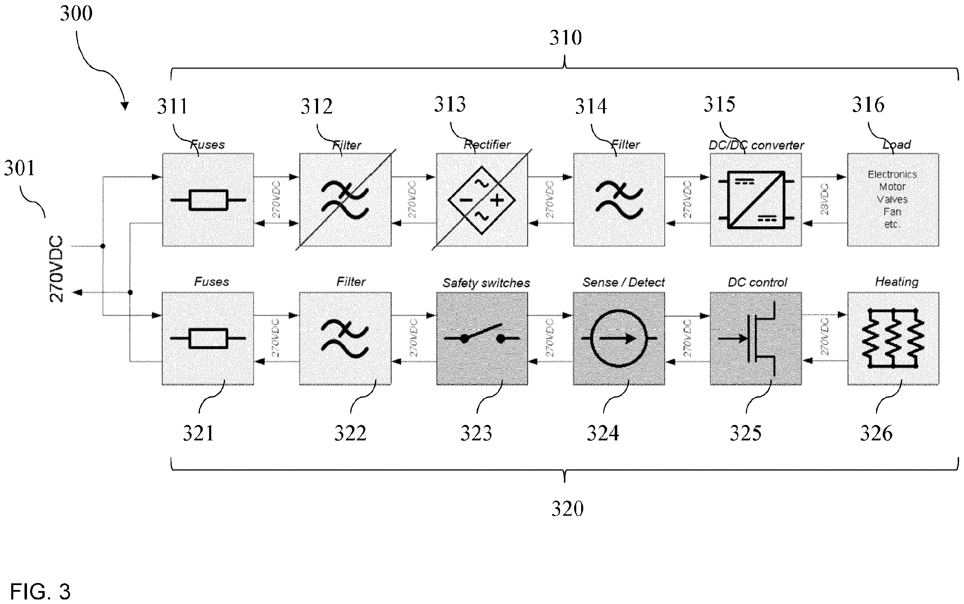

A functional diagram of such an oven GAIN 300 that operates on HVDC is shown in Figure 3. For illustrative purposes, the diagram of Figure 3 is illustrated in a comparative way to the AC system of Figure 1. In this way, whilst the filter 312 and rectifier 313 on the low voltage load path 310 are illustrated, owing to the consistent use of DC power, these are actually eliminated from the architecture of the oven 300, thus saving weight, space and complexity in the final product.

As the HVDC oven GAIN 300 is configured to operate with HVDC power at its input 301, which already may be equivalent to the HVDC power provided to the filter 114 on the low voltage DC path 110, filter 314, DC/DC converter 315 and loads 316 may be similar components to those of known systems. Further, fuses 311 and 321, connectors and wiring may be adapted so as to operate on HVDC input power. A suitable HV filter 322 may be selected to comply with EMI requirements, and similarly heating element(s) 326 may be selected so as to maintain a desired power rating when utilising the HVDC input. Similarly, the safety switches topology and rating, or technology may be updated so as to be suitable for use with HVDC input. The sense and safety circuits may be provided so as to be suitable for use with HVDC input, and to match the new safety switches topologies. Finally, the heating control elements may to be replaced, to provide suitable control of the HVDC heating element.

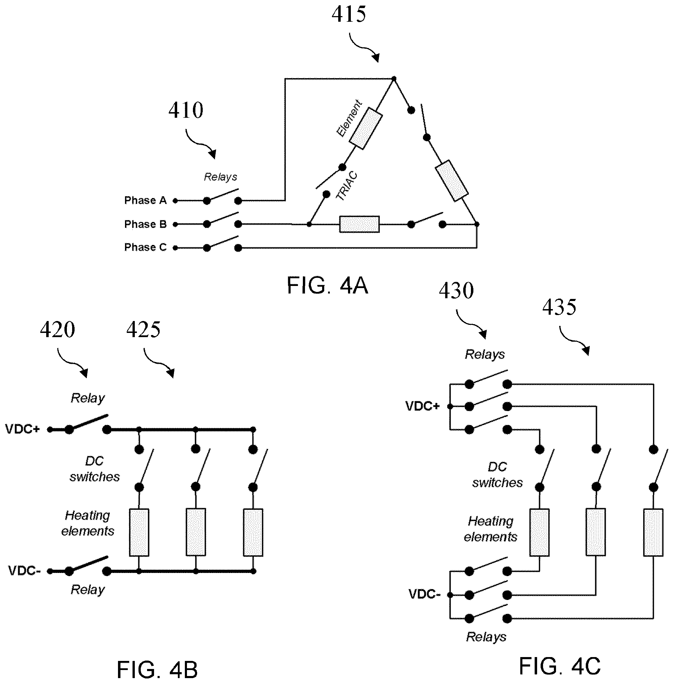

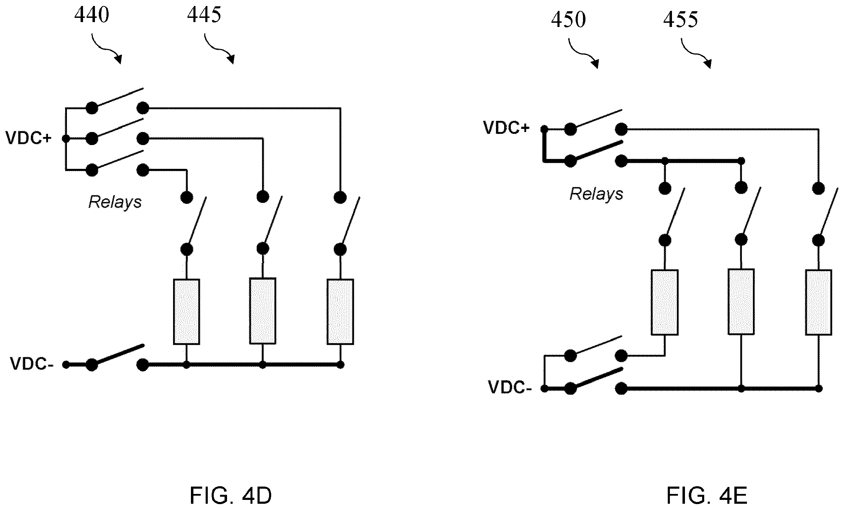

Figures 4A to 4C show various safety switch arrangements, such as those that may be used in a GAIN oven. As would be appreciated, the main purpose of safety relays is to be able to disconnect power in case of failure detection.

Figure 4A shows an AC safety switch arrangement 410, such as the safety switch arrangement 123 seen in Figure 1, and their relationship with heating elements 415, such as heating arrangement 126 in Figure 1. As can be seen, the safety switch arrangement 410 may comprise a relay on each phase of the input to the heating element. In the event of a fault (for example, whether one of the input voltages are outside of range, whether the input frequency is outside of range, whether one phase is missing (no voltage), whether a switch is stuck at a closed position, etc.), these relays may be configured to disconnect the heating elements 415 arranged in a delta topology with TRIACs for control from their input, in order to prevent further dangerous failure.

Owing to there being fewer wires (for a similar power output) in a HVDC heating system, such a system can experience higher currents. Therefore, it is desirable for HVDC systems to be adapted so as to have more robust safety relays so as to be able to cope with worst-case HVDC scenarios, and their higher currents. One such way is shown in Figure 4B, where a single set of relays 420 (such as the safety switches 323 of Figure 3) are provided, configured to disconnect the heating elements 425 (such as heating arrangement 326 in Figure 3) from their input. Such relays, and their input wires may be selected so as to be suitable for use with the worst-case scenario current of such a HVDC system. For example, solid state relays may be used owing to their short circuit protection, high current rating, miniaturization and longer lifecycles. An example of such relays are solid state (semiconductor) relays (i.e. PhotoMOS, MOSFET, IGBT). In the example of Figure 4B, the safety relays are provided on both the HVDC+ line and the return for redundancy, however they may be placed on the HVDC or the return line.

Another potential safety relay system 430 (which again may be used as safety switches 323 of Figure 3) is shown in Figure 4C, connected to heating elements 435 (such as heating arrangement 326 in Figure 3). As can be seen, the relays 430 are split into parallel relays, for example one for each heating element as opposed for one for each bus bar (as in Figure 4B). Such a configuration 430 reduces the input current at each relay and their associated wires, thereby reducing the required rating for such components. Such an arrangement may obviate the need for high-current electromechanical relays or solid state relays, which can be scarce, heavy and bulky. Rather, comparatively lower current electromechanical relays may be used by reducing the current at each relay. Figured 4D and 4E show additional alternative arrangements. Again, the safety relays are provided at HVDC as well as on return for redundancy, although it would be appreciated that the relays may be found only on one of the HVDC+ or the return.

As an alternative to mechanical safety relays, it may be possible to replace such relays with redundant IGBT/MOSFETs, thereby improving reliability (owing to their improved cycling ability, etc.) and space.

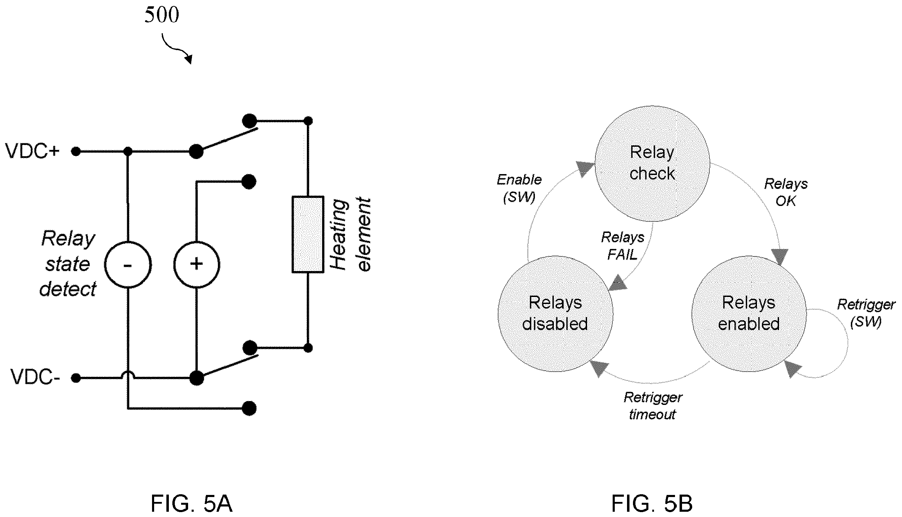

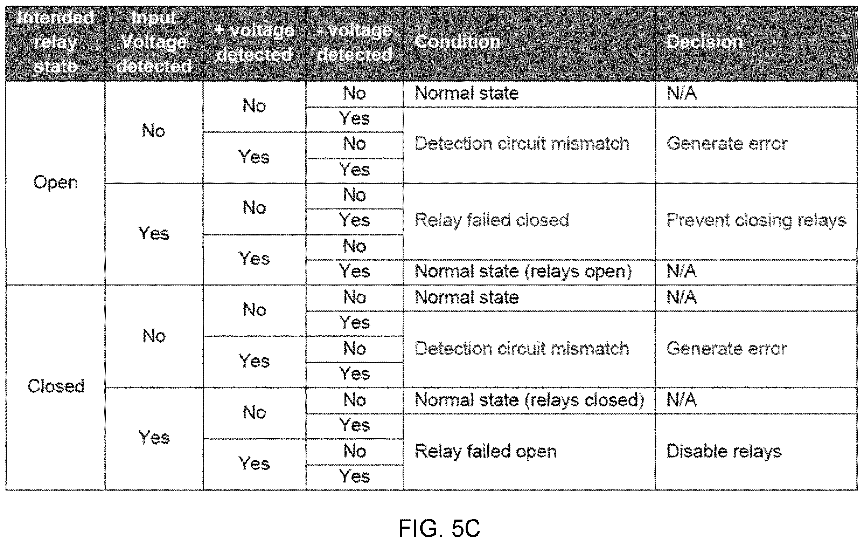

As above, the sense/detect circuit 324 may be adapted for use with HVDC. One such example and its operation is illustrated in Figures 5A to 5C. Figure 5A shows a sense/detect circuit 500 for use in a HVDC GAIN, such as the sense/detect circuit 324 of Figure 3. As would be appreciated, the exact topology of the sense/detect circuit 500 depends on the topology of the safety relay with which it is used. The safety relay 500 performs the operations set out in Figure 5B, in order to take the decisions outlined in Figure 5C, thereby controlling the safety relays.

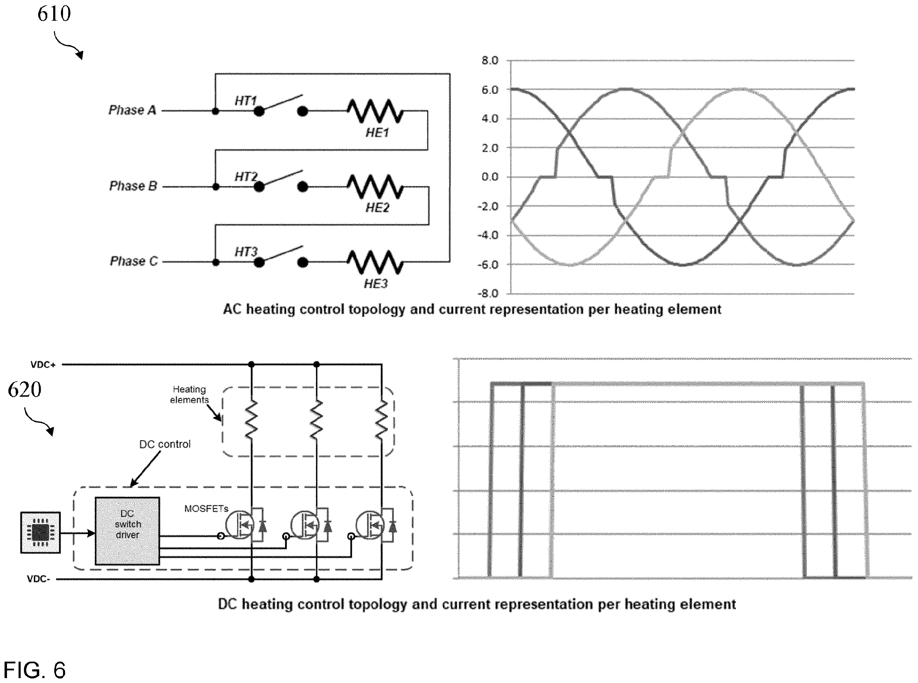

The heating control may also be adapted for use with input HVDC. Figure 6 shows a comparison between heating control 610 for use with an AC GAIN oven unit, and control 620 for use with a HVDC GAIN oven unit. AC heating control elements (zerocrossing detectors and TRIACs such as those seen in heating controls 415 and 125) may not be used for DC control, and therefore, for a HVDC GAIN oven unit, they may be replaced by DC elements.

For example, HVDC GAIN units may utilise DC components such as optocouplers and IGBT/MOSFETs or PhotoMOS. It may be necessary to mitigate issues regarding electromagnetic interference (EMI) and power quality (PQ) due to higher switching transients in DC power, for example, by gradual control. In the example of heating control 620, there is provided a switch per heating element so as to improve flexibility in heat production/control, and also to reduce EMI by delaying each heater's activation (i.e. by not switching all heaters at the same time).

In addition, traditional Silicon MOSFETs present very good drain-source onresistance (RDS_{ON}), almost comparable to an electromechanical contactor, but a low drain source voltage (VDS) blocking capability, this characteristic delimits the use to low voltage applications. In the other hand, IGBTs devices presents a very good VDS blocking capability but a higher RDS_{ON}, which generates higher conduction losses.

In order to further mitigate these issues, it may be beneficial to utilize Silicon Carbide technology for MOSFET applications in HVDC heating control, as it may provide low RDS_{ON} and high VDS, and it is easier to control its ohmic zone by means of the gate threshold voltage (VGS), thereby providing better control over capacitive loads, inductive loads and short-circuits.

A similar process may be followed to provide HVDC GAINs units, with modifications to optimize the units for HVDC input power. For example, a HVDC microwave oven (MWO) may be provided based on magnetron sources, or a Solid-State Radio Frequency (SSRF) MWO.

SSRF MWOs use the same low voltage DC as the remaining control electronics (~28V) on the low voltage line, and so only one power supply (DC-DC converter) may be required, thereby saving space, weight and cost compared with dedicated (and bulky) HV power supplies for magnetron sources (HV DC-DC converters).

In addition, SSRF MWO power consumption is much lower (3 to 4 times lower) than magnetron based MWO, and therefore may experience, lower impact on its EMI & PQ requirements, and its power demand can be gradual. In addition, owing to its lower power consumption, current electromechanical safety relays may be re-used on the new HVDC power architecture.

Another example HVDC GAIN unit may be a BMP. As outlined above, BMPs have a similar internal structure to ovens, and so may be provided with a similar internal structure to those shown in Figure 3.

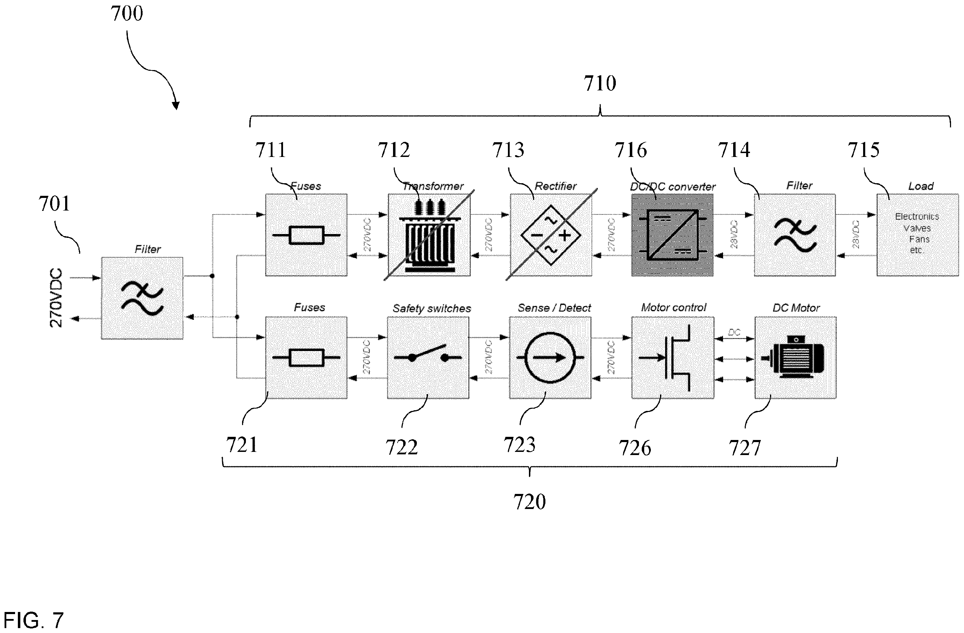

A functional diagram of a chiller/refrigerator/freezer GAIN 700 that operates on HVDC is shown in Figure 7. For illustrative purposes, the diagram of Figure 7 is illustrated in a comparative way to the AC system of Figure 2, with similar reference figures denoting similar components. In this way, whilst the transformer 712 and rectifier 713 on the low voltage load path 710 are illustrated, owing to the consistent use of DC power, these may be actually eliminated from the architecture of the chiller, thus saving weight, space and complexity in the final product, and instead replaced by a simple DC/DC converter 716 to convert the input HVDC to a low voltage DC for the loads 715. Such a DC/DC converter may be more compact and include protection and safety features (over current, over temp, inrush limitation, disable pin, etc.). In addition, as may be noted, transformer 224 and rectifier 225 may be removed from the high voltage load path 720.

Owing to the lower current consumption of chillers/refrigerators/freezers compared to ovens/BMPs (e.g. 400W vs. 4200W), and the fact that the safety relays 722 may be used as control elements, it may be possible to utilize the same safety relays 722 (or alternatively, to replace them with MOSFET/IGBTs). As a result, either solid state relays, or electromechanical relays may be utilized at the power bus.

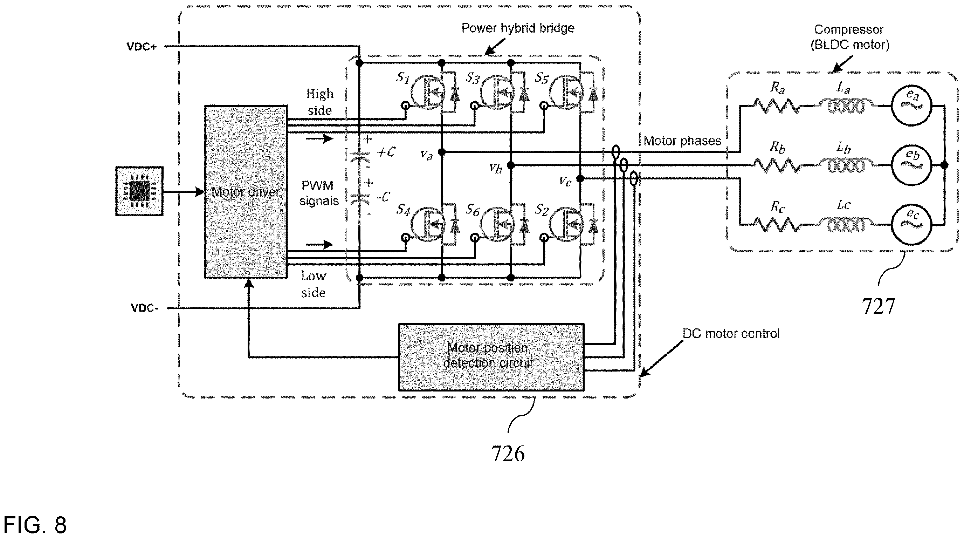

The compressor 727 of Figure 7 may be based on a brushless motor. Such a brushless motor may be powered by a power bridge which is directly powered from the HVDC power supply, and commanded by a microcontroller. An example is shown in Figure 8, which shows in detail an example motor control 726, and how it may control a brushless DC compressor 727.

Again, whilst in the example of Figure 7, the low voltage path 710 and the high voltage path 720 share a common line filter at its input 701, it would be appreciated that this may be replaced by separate line filters on each path. The provision of separate line filters may improve EMI response.

Whilst only two example HVDC GAINs units are detailed above, it would be appreciated that the teaching herein is applicable to most, if not all GAINs units, such that an entire range of HVDC GAINs units may be provided throughout an aircraft. In addition, Due to the similarity between GAIN product designs, some potential solutions can be shared for all of them.

The example GAINs outlined above may mitigate issues that may be present in HVDC systems, reducing the risk of arc fault events during aircraft operation owing to in the increase of the voltage operational level of the aircraft.

By providing aircraft appliances that, rather than operating on 3-phase 115V AC power as is known in the art, are configured to operate on HVDC power. Doing so would eliminate the need for several conversions throughout the power distribution system, and therefore save substantial weight in each aircraft appliance, and thus in an aircraft as a whole. In addition, HVDC can be transmitted through fewer wires than 3-phase 115V AC power. Therefore, substantial weight and space savings in an aircraft adopting a HVDC distribution system enabled by the use of HVDC appliances may be realized, resulting in improved efficiency in operation of the aircraft owing to the reduced fuel consumption and space utilization.

Specifically regarding the GAINs units themselves, the removal of the internal AC/DC converter and associated components on the GAIN control units may improve efficiency, reduce weight, reduce cost, save space and reduce residual heat production within the units themselves.

In order to do so, the GAINs products may be provided to be powered for meeting certification requirements in an aircraft, for example, by adopting one or more of the safety relay arrangements, sensing arrangements, or control arrangements outlined above, depending on exact requirements for the GAINs/appliance. In doing so, the galley insert sub-systems may be adapted for a DC electrical power supply feed through an electrical connector provided at the galley compartment inside the aircraft.

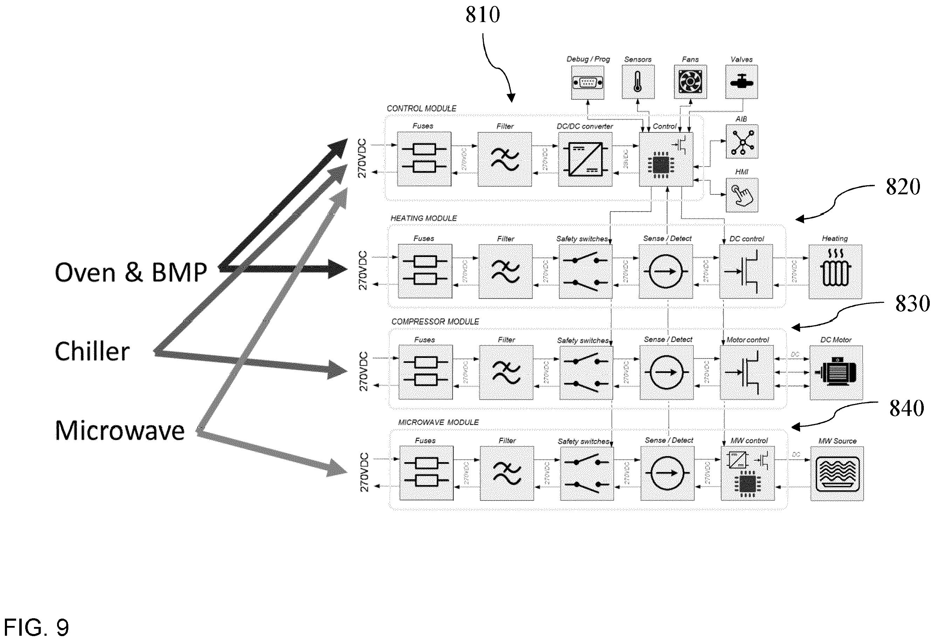

In addition, such HVDC GAIN units may be designed to utilize modular blocks, owing to their similar low voltage paths (see, for example, low voltage paths 310 and 710). As such, the GAIN architectures could be designed with modular blocks such as printed circuit boards (PCBs) which could be shared (or re-used) between different GAIN types, as seen in Figure 9.

In this way, a single low voltage path may be used to control several HVDC modules, each of which is configured to operate a HVDC appliance.

As such, Figure 9 shows a modular appliance arrangement comprising a shared low voltage control block 810 which may comprise fuses, a filter, a DC-DC converter, a controller (CPU), input and output ports (e.g. for valves, fans, sensors, etc.), and interfaces (e.g.. AIB, HMI, PROG, etc.). One or more HVDC modules may be connected to the low voltage control block 810.

Such a common low voltage control block 810 may be configured to control a heating module 820, a compressor module 830, and a microwave module 840. The heating module 820 may comprise fuses, a filter, relays, a sensing module, and a DC switching module configured to power a DC heating element. The compressor module 830 may comprise fuses, a filter, relays, a sensing module, and a motor switching module configured to control a compressor, such as a compressor for a chiller. Microwave power module 840 may comprise fuses, a filter, relays, a sensing module and a DC power supply and control configured to control a microwave source.

Each control block 810, 820, 830 and 840 may be respective PCBs connected to a HVDC source at each of their inputs. Each of the HVDC control blocks 820, 830 and 840 may be connected to the single low voltage control block 810. The low voltage control block 810 may be configured to recognize which HVDC control blocks have been connected to it, and be configured to control each of the HVDC blocks according to their identified function. For example, the low voltage control block may recognize that a compressor module 830 has been connected, and therefore may provide suitable instructions to the compressor module 830 such that the compressor module 830 may control a compressor.

## Claims

1. An appliance (300, 700) for aircraft, wherein the appliance is configured to be powered by high voltage direct current, HVDC, power at its input (301, 701).

2. The appliance of claim 1, wherein the appliance comprises
a low voltage load path (310, 710) comprising at least one low voltage load (316, 715), and a DC/DC converter (315, 716) configured to convert HVDC power from the input (301, 701) to a low voltage DC output for use by the low voltage loads (316, 715); and
a high voltage load path (320, 720) comprising at least one high voltage load (326, 727), and wherein the high voltage line path is configured to provide HVDC power via a HVDC power bus from the input (301, 701) to the high voltage load(s) for use by the high voltage load(s) (326, 727).

3. The appliance of claim 2, wherein the high voltage line path (320, 720) comprises
a sense/detect module (324, 723) configured to detect a fault in the appliance, and
at least one safety relay (323, 722) configured to disconnect the HVDC input from the high voltage load(s) (326, 727) if a fault is detected by the sense/detect module (324, 723).

4. The appliance of claim 3, wherein the appliance is a Point of Use, POU, chiller.

5. The appliance of claim 3, wherein the appliance is a galley insert, GAIN.

6. The appliance of claim 5, wherein the GAIN is an oven, and high voltage load(s) comprise a plurality of heating elements topologies (425, 435, 445, 455) connected in parallel to the HVDC power bus.

7. The appliance of claim 6, wherein the at least one safety relay comprises at least one safety relay connected in series with each of the heating elements.

8. The appliance of claim 5, wherein the GAIN is a chiller, and wherein the high voltage load(s) comprises a compressor (727) powered directly from the HVDC power bus, and configured to be commanded by a microcontroller.

9. The appliance of any of claims 3 to 8, wherein the at least one safety relay comprises at least one safety relay located at the power bus.

10. The appliance of any of claims 3 to 9, wherein the at least one safety relay (323, 722) comprises at least one solid state relay.

11. The appliance of any of claims 3 to 10, wherein the at least one safety relay (323, 722) comprises at least one electromechanical relay.

12. A modular system for use in an aircraft comprising;
a low voltage control module (810) configured to receive high voltage direct current, HVDC, at its input and control at least one low voltage DC load; and
at least one HVDC module (820, 830, 840) configured to receive HVDC power at its input and provide power and control to a HVDC load;
wherein the at least one HVDC module is operatively connected to and controlled by the low voltage control module (810).

13. The modular system of claim 12;
wherein the at least one HVDC module comprises one or more of;
a heating module (820) configured to power and control at least one HVDC heating element,
a compressor module (830) configured to power and control a compressor for a chiller, and
a microwave module (840) configured to power and control a microwave source.

14. An aircraft comprising;
a HVDC power supply network, and
at least one appliance as defined in any of claims 1 to 11.

15. An aircraft comprising;
a HVDC power supply network, and
at least one modular system as defined in any of claims 12 or 13.
